# EUROPÄISCHE PATENTSCHRIFT

(11) **EP 3 048 056 B1**
(45) Veröffentlichungstag und Bekanntmachung des Hinweises auf die Patenterteilung: **27.09.2017**
(21) Anmeldenummer: 16150711.6
(22) Anmeldetag: 11.01.2016
(51) Int. Cl.: B65B 51/26, B65B 9/20

(54) **VORRICHTUNG ZUM VERSIEGELN EINER VERPACKUNG ODER EINES VERPACKUNGSMATERIALS**
DEVICE FOR SEALING A PACKAGE OR A PACKAGING MATERIAL
DISPOSITIF DE SCELLAGE D'UN EMBALLAGE OU D'UN MATERIAU D'EMBALLAGE

(30) Priorität: 20.01.2015 DE 102015200780
(43) Veröffentlichungstag der Anmeldung: 27.07.2016
(73) Patentinhaber: ROBERT BOSCH GMBH, 70442 Stuttgart (DE)
(72) Erfinder: Nievergeld, Hans, 6031 GB Nederweert (NL); van Mens, Hein, 6003 NR Weert (NL); Simons, Jules, 6088 HT Roggel (NL)

(56) Entgegenhaltungen:
- EP-A1- 0 232 220
- DE-A1- 4 315 069
- DE-B- 1 075 280
- US-A- 3 221 469

## Beschreibung

### Stand der Technik

Die Erfindung geht aus von einer Vorrichtung zum Versiegeln einer Verpackung oder eines Verpackungsmaterials nach der Gattung des unabhängigen Anspruchs. Aus der DE 198 58 567 C2 ist bereits eine Vorrichtung zum Herstellen von Schlauchbeutelpackungen bekannt. Die Schlauchbeutelpackungen weisen eine im wesentlichen rechteckige Querschnittsfläche mit in den Eckbereichen ausgebildeten Verstärkungsnähten und eine in einer Seitenwand angeordnete Längsnaht auf. Über eine Formschulter wird aus einer ebenen Folienbahn ein Packstoffschlauch geformt.

Aus der US-A-3221469 sind ein Verfahren und eine Vorrichtung zur Formung tetraederförmiger Verpackungen bekannt. Vertikal angeordnete Siegelbacken bringen während des Vorschubs Wärme und Druck auf die zu versiegelnde Verpackung auf.

Eine Längsnahtsiegeleinrichtung bildet eine Längsnaht, eine Längskantensiegeleinrichtung bildet Verstärkungsnähte. Weiterhin sind eine Quernahtsiegeleinrichtung und eine Trenneinrichtung zum Abtrennen der einzelnen Schlauchbeutelpackungen von dem Packstoffschlauch vorgesehen. Außerdem wird ein Zip-Streifen aufgebracht, indem in entsprechenden Abständen vorab auf einer Heißsiegelbahn-Packstoffbahn die Zip-Streifen befestigt sind. Hierfür ist eine entsprechende Einrichtung vorzusehen.

Es ist Aufgabe der vorliegenden Erfindung, die Vorrichtung weiter zu vereinfachen und für einen kontinuierlichen Betrieb vorzusehen. Diese Aufgabe wird gelöst durch die Merkmale des unabhängigen Anspruchs.

### Vorteile der Erfindung

Die erfindungsgemäße Vorrichtung zum Versiegeln einer Verpackung oder eines Verpackungsmaterials hat demgegenüber den Vorteil, dass eine kontinuierliche Arbeitsweise der Vorrichtung möglich ist. Dadurch erhöht sich die Bearbeitungsgeschwindigkeit. Dies wird erreicht, indem zumindest ein Antrieb vorgesehen ist, der die Längssiegeleinrichtung während des Siegelvorgangs der Längsnaht entlang der Transportrichtung des Verpackungsmaterials bewegt. Außerdem erfolgt eine schonendere Siegelung, da Relativbewegungen der Siegelbacke relativ zum Verpackungsmaterial vermieden werden. Dies reduziert die Gefahr von Beschädigungen der Verpackung. Erfindungsgemäß ist vorgesehen, dass zumindest eine Siegelbacke zumindest zwei Siegelelemente umfasst zur Erstellung zumindest zweier Siegelungen. Dadurch kann die Längssiegeleinrichtung sowohl eine Kopfnaht erstellen als auch eine Einsiegelung eines Verschlusses, vorzugsweise ein Zip-Verschluss, vornehmen. Die vorgeschlagene Realisierung erlaubt die Integration dieser Funktionen in einer einzigen Siegelbacke, so dass eine sehr platzsparende Lösung entsteht. Auch könnten bestimmte Komponenten wie Antrieb, Temperierung oder ähnliches gemeinsam genutzt werden.

In einer zweckmäßigen Weiterbildung ist vorgesehen, dass die Quersiegeleinheit mit einem Antrieb versehen ist, der die Quersiegeleinheit entlang der Transportrichtung des Verpackungsmaterials bewegt. Besonders bevorzugt wird die Quersiegeleinheit mit etwas höherer Geschwindigkeit bewegt als die Längssiegeleinrichtung entlang der Transportrichtung des Verpackungsmaterials. Dadurch kann eine sogenannte Strip-Funktion realisiert werden, so dass das Verpackungsmaterial etwas gedehnt wird und sich keine Falten im Bereich der Quersiegeleinheit bilden. Dadurch verbessert sich die Beutelqualität.

In einer zweckmäßigen Weiterbildung ist vorgesehen, dass die Siegelbacken unterschiedliche Siegelelemente umfassen, die einzeln beheizbar und/oder temperierbar und/oder einstellbar bezüglich einer Siegelkraft ausgebildet sind. Dadurch lassen sich die jeweiligen Anforderungen unterschiedlicher Funktionalitäten (Erstellen der Kopfnaht, Einsiegeln des Verschlusses) individuell an die speziellen Erfordernisse leicht anpassen. Die Qualität der Siegelungen kann erhöht werden. Besonders zweckmäßig ist hierbei, dass die Längssiegeleinrichtung Heizelemente und/oder Temperaturfühler umfasst.

In einer zweckmäßigen Weiterbildung ist zumindest ein Befestigungs- bzw. Justierelement vorgesehen zur Einstellung einer Position und/oder einer Siegelkraft zumindest eines Siegelelements innerhalb der Siegelbacke. Dies ermöglicht eine besonders flexible und einfache Anpassung der Siegelbacke an unterschiedliche Beutel- und Siegelgeometrien. Dies reduziert mögliche Umrüstzeiten deutlich.

In einer zweckmäßigen Weiterbildung ist vorgesehen, dass die Längssiegeleinrichtung an einer Aufnahme angeordnet ist, die mit dem Antrieb verbunden ist. wobei an der Aufnahme ein weiteres Antriebsmittel angeordnet ist zur Bewegung der Siegelbacken. Damit stört der Antrieb zur Bewegung der kompletten Längssiegeleinrichtung nicht den Packmitteltransport durch eine von den Siegelbacken entfernte Anordnung, während das Antriebsmittel für die Relativbewegung der Siegelbacken nahe an diesen angeordnet werden kann. Besonders vorteilhaft ist hierzu ein Aufnahmeträger vorgesehen ist, der im Wesentlichen rechtwinklig zu der Aufnahme angeordnet ist. Dies trägt den speziellen Platzverhältnissen Rechnung.

Weitere zweckmäßige Weiterbildungen ergeben sich aus weiteren abhängigen Ansprüchen und aus der Beschreibung.

### Zeichnung

Ein Ausführungsbeispiel der erfindungsgemäßen Vorrichtung zum Versiegeln einer Verpackung oder eines Verpackungsmaterials ist in der Zeichnung dargestellt und wird nachfolgend näher erläutert.

Es zeigen:
Die Figur 1 eine perspektivische Ansicht einer Schlauchbeutelmaschine,
die Figur 2 einen Ausschnitt aus Figur 1 zur Hervorhebung der Einbausituation einer Längssiegeleinrichtung,
die Figur 3 eine perspektivische Ansicht einer von einem Antriebsmittel verschiebbaren Längssiegeleinrichtung,
die Figur 4 Siegelbacken der Längssiegeleinrichtung in der Siegelposition sowie
die Figur 5 eine einzelne Siegelbacke.

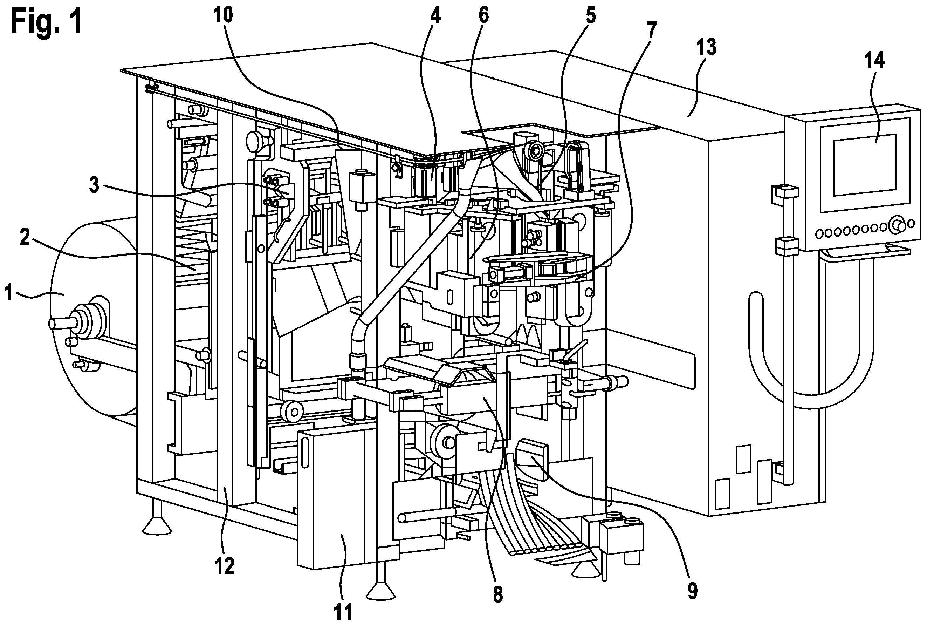

In Figur 1 ist eine Form-, Füll- und Verschließmaschine für Schlauchbeutel gezeigt. Hierbei wird beispielsweise eine Folie 1 als Verpackungsmaterial in Form einer Rolle angeliefert. Die auf einer Rolle aufgewickelte Folie 1 wird durch ein Tänzersystem 2 abgewickelt und auf konstante Bahnkraft gehalten. Die Folie 1 wird durch einen Formatsatz 5, wie beispielswiese eine Formschulter, zu einem Beutel 9 geformt. Ein am Formatsatz 5 angeordnetes Abzugsorgan 6 sorgt für eine geregelte Bahngeschwindigkeit im Beutelformprozess. Das Abzugsorgan 6 bewegt die Folie 1 bzw. den Folienschlauch in vertikaler Richtung nach unten. Der Verschluss der Längsnaht des Beutels 9 wird von einer Längssiegeleinrichtung 7 vorgenommen. Die Längssiegeleinrichtung 7 siegelt Nähte längs zur Transportrichtung der Folie 1. Anschließend wird der Beutel 9 durch eine Quersiegeleinheit 8 aus der zu einem Schlauch geformten Folie 1 gesiegelt und zugleich durch in Siegelbacken integrierte Trennvorrichtung getrennt. Unten verschlossene Beutel 9 werden mit einem Produkt gefüllt und im nachfolgenden Prozessschritt durch die Quersiegeleinheit 8 komplett verschlossen. Die Quersiegeleinheit 8 siegelt Nähte quer zur Transportrichtung der Folie 1. Die genannten Elemente sind in einem Maschinenrahmen 12 montiert und werden über eine Steuerungseinheit 14 gesteuert, welche auf Steuerungseinheiten im Schaltschrank 13 zurückgreift.

Alternativ können auf einer solchen Vorrichtung auch Beutel 9 hergestellt werden, die durch einen sogenannten Zip-Verschluss 10 geöffnet und verschlossen werden können. Dieser Zip-Verschluss 10 wird über eine Zuführeinheit 4 an geeigneter Stelle zugeführt und zur Optimierung der Nahtqualität mit einer Ausstanzung an dem Zip-Verschluss 10 versehen. Die Reste der Ausstanzung werden durch eine Auffangeinheit 11 gesammelt. Ein Kantensiegelmodul 3 siegelt die Kanten des Beutels 9 zur Verstärkung und Stabilität des Beutels 9. Das Kantensiegelmodul 3 ist in dem Ausführungsbeispiel zwischen dem Tänzersystem 2 und dem Formatsatz 5 angeordnet.

Aufgrund der kontinuierlichen Arbeitsweise der Schlauchbeutelmaschine sind ein Vertikalantrieb und ein Horizontalantrieb für die Quersiegeleinheit 8 separat ausgeführt. Optional kann es notwendig sein, zur Erstellung von sogenannter DOY ZIP Style-Beuteln 9 noch Eurolöcher in den Beutelkopf einzubringen. Dies könnte beispielsweise durch eine entsprechende Stanzeinheit realisiert werden.

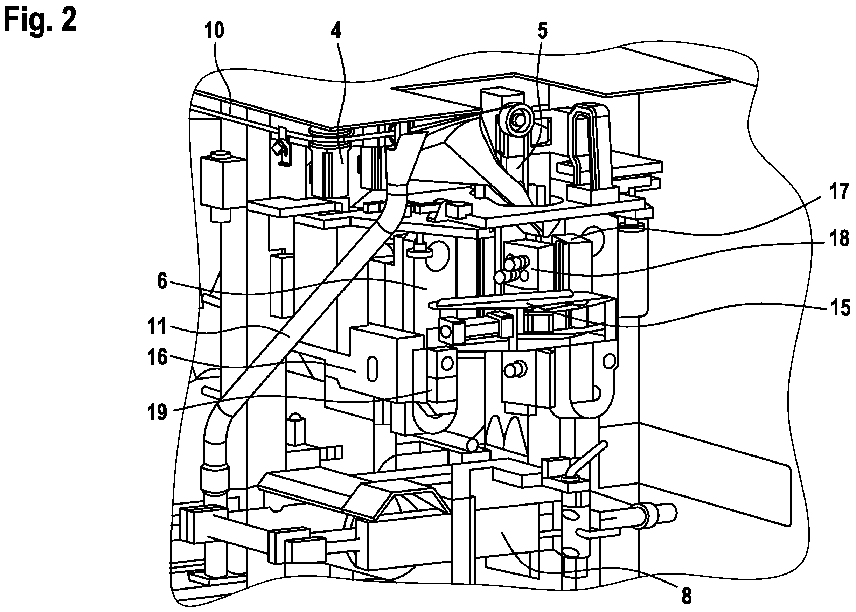

Figur 2 zeigt in detaillierterer Darstellung die Einbausituation der Längssiegeleinrichtung 7. Die Längssiegeleinrichtung 7 umfasst einen Aufnahmeträger 16 und eine Justiereinheit 19, an der die Ausrichtung von Siegelbacken 17, 18 eingestellt werden kann. An der Justiereinheit 19 ist eine Aufnahme 15 der Siegelbacken 17, 18 angebracht. Der Aufnahmeträger 16 ist seitlich von dem Abzugsorgan 6 angeordnet. Das vorstehende Ende des Aufnahmeträgers 16 läuft in der Justiereinheit 19 aus. Die Justiereinheit 19 wirkt mit der Aufnahme 15 zusammen, die im Wesentlichen senkrecht zum Aufnahmeträger 16 orientiert ist. Die Siegelbacken 17, 18 wiederum sind an der dem Formatsatz 5 zugewandten Seite der Aufnahme angeordnet.

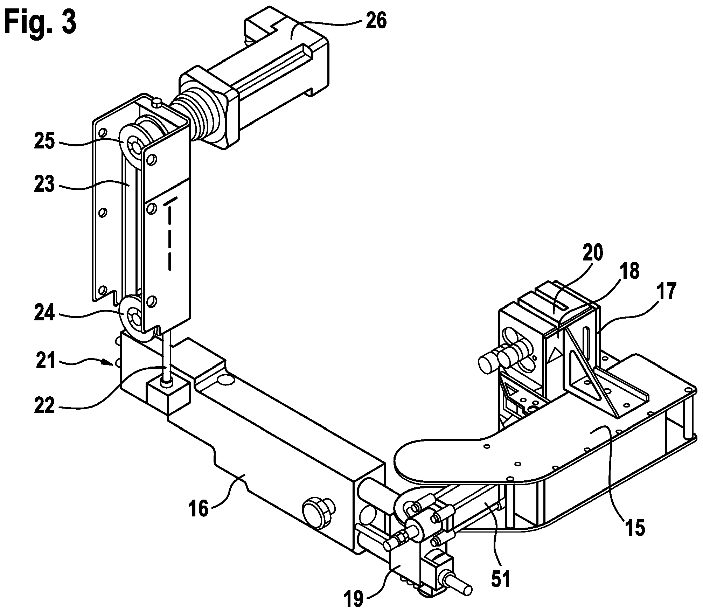

Eine weitere Detailansicht der Komponenten der Längssiegeleinrichtung 7 ist in der Figur 3 dargestellt. Der Aufnahmeträger 16 der Längssiegeleinrichtung 7 ist in einem Bereich 21 mit dem Maschinengestell 12 verbindbar. Der Aufnahmeträger 16 ist mit einer Koppelstange 22 an einen Zahnriemen 23 gekoppelt. Der Zahnriemen 23 wird durch Zahnriemenscheiben 24, 25 gespannt. Die Zahnriemenscheibe 24 wird durch einen Antrieb 26, vorzugsweise ein ServoMotor, angetrieben. Dies führt zu einer Bewegung der gesamten, an dem Aufnahmeträger 16 montierten Längssiegeleinrichtung 7, bestehend aus der Aufnahme 15, einem Antriebszylinder 51, Siegelbacken 17, 18 und einer Folienführung 20. Die Bewegung der Längssiegeleinheit 7 erfolgt in Folienabzugsrichtung bzw. in Transportrichtung des Verpackungsmaterials 1, bei einer vertikalen Schlauchbeutelmaschine also in vertikaler Richtung. Die Vertikalbewegung ist zur Foliengeschwindigkeit, mit der die Abzugseinheit 6 die Folie 1 abzieht, synchronisiert, so dass eine Faltenbildung der Folie 1 ausgeschlossen ist. Dadurch wird auch eine Relativbewegung zwischen Folie 1 und Siegelbacken 17, 18 der Längssiegeleinrichtung 7 ausgeschlossen.

Eine Zusatzfunktion ergibt sich bei dem Zusammenwirken der vorzugsweise servo-getriebenen Längssiegeleinrichtung 7 mit der vorzugsweise servo-getriebenen Quersiegeleinheit 8. Durch den Längssiegelvorgang ist die Folie 1 zumindest während des Siegelvorgangs geklemmt. Nun kann die Quersiegeleinheit 8 etwas schneller bewegt werden (beispielsweise einstellbar in einem Bereich zwischen 0 und 200% der Foliengeschwindigkeit) als die Foliengeschwindigkeit, die der Vorschubgeschwindigkeit der Längssiegeleinrichtung 7 entspricht. Dies hat zur Folge, dass die Folie 1 etwas gedehnt wird und somit sich keine Falten im Bereich der Quersiegeleinheit 8 bilden (sog. Strip-Funktion). Hierbei können die Backen der Quersiegeleinheit 8 zu Beginn der schnelleren Bewegung noch nicht ganz (erst zu beispielsweise 98%) geschlossen sein, um die im Beutel 9 befindliche Luft herauszustreichen. Anschließend erfolgt die Quersiegelung.

Der Antriebszylinder 51 öffnet die Siegelbacken 17, 18, um gegen die Förderrichtung der Abzugseinheit 6 zu verfahren und schließt die Siegelbacken 17, 18, um eine Siegelung durchzuführen. Eine Folienführung 20 positioniert die Folie 1 mit bereits eingelegtem Zip-Verschluss 10 zwischen den Siegelbacken 17,18.

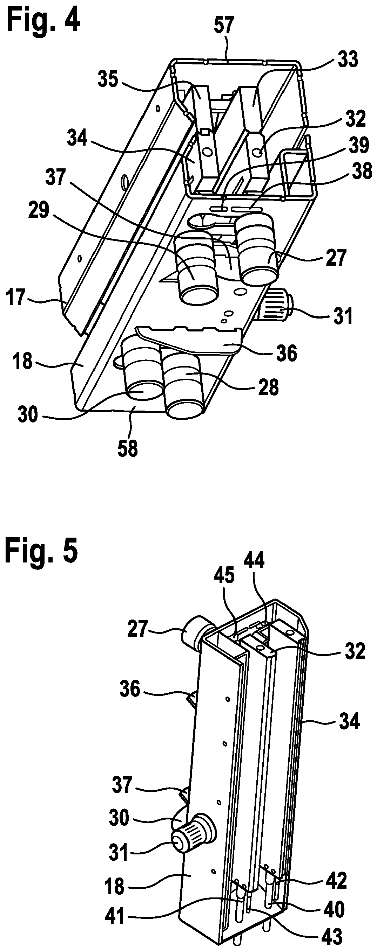

Die Siegelbacken 17, 18 sind in den Figuren 4 und 5 näher dargestellt. Die dort gezeigten Siegelbacken 17, 18 ermöglichen es, zwei parallele Längsnähte zu erstellen. So wird der Zip-Verschluss 10 eingesiegelt unter Verwendung von Siegelelementen 34, 35. Außerdem wird eine hierzu parallele Längsnaht gesiegelt unter Verwendung der Siegelelemente 32, 33. Dies eignet sich für die Fertigung sog. DOY ZIP Style-Beutel 9. Die Längssiegeleinrichtung 7 erstellt unter Verwendung der Siegelemente 32, 33 die Kopfnaht und siegelt unter Verwendung der Siegelelemente 34, 35 den Zip-Verschluss 10 ein. Die Quersiegeleinrichtung 7 bzw. das Kantensiegelmodul 3 bringen die Siegelnähte quer zur Kopfnaht in der gewünschten Weise ein.

Alternativ kann die Längssiegeleinrichtung 7 auch nur eine einzige Längsnaht erstellen, so dass hierzu beispielsweise auf die Siegelelemente 34, 35 verzichtet werden könnte.

Die Siegelbacken 17, 18 bestehen jeweils aus Gehäusen 57, 58, den Siegelelementen 32 bis 35, Befestigungs- bzw. Justierungselementen 27 bis 30, einem elektrischen Anschluss 31 und Leitelementen 36, 37, welche die Montage vereinfachen. Die Befestigungs- bzw. Justierungselemente 27 bis 30 dienen dazu, den Abstand Kopfnahtbereich und Zip-Verschluss-Position einzustellen. Die Befestigungs- bzw. Justierungselemente 27 bis 30 verändern also den Abstand zwischen den Siegelelementen 32, 33 (für die Kopfnaht) und den Siegelelementen 34, 35 (für das Einsiegeln des Zip-Verschlusses 10). Damit wird eine hohe Formatflexibilität erreicht. Die Siegelelemente 32 bis 35 sind alle einzeln beheizt und temperaturüberwacht. Dies stellen Heizelemente 40, 41 und Temperaturfühler 42, 43 sicher. Mit einer separaten Temperierung sind für die Kopfnahtbildung des Beutels 9 im Bereich der Siegelelemente 32, 33 und die Zip-Verschluss-Applikation im Bereich der Siegelelemente 34, 35 unterschiedliche Temperaturen einstellbar. Dies führt zu einer erhöhten Flexibilität während der Produktion der Beutel 9, vorzugsweise von sogenannten Doy-Zip-Style-Beuteln. Um die Einstellbarkeit des Abstands zwischen den Kopfnahtsiegelelementen 32, 33 und den Zip-Verschluss-Applikationselementen 34, 35 zu vereinfachen, wurden Sichtschlitze 38, 39 eingebracht. Diese geben die Sicht auf Positionsreferenzen 44 der Siegelelemente 32, 34 frei und führen somit zu einer sehr einfachen Positionierung der Siegelelemente 32, 34. Dies reduziert mögliche Umrüstzeiten deutlich.

Das Öffnen und Schließen der Siegelbacken 17, 18 der Längssiegeleinrichtung 7 erfolgt über den Antriebszylinder 51. Der Antriebszylinder 51 ist beispielsweise als Pneumatikzylinder ausgeführt.

Bei dem sogenannten Doy-Zip-Beutel 9 wird der Zip-Verschluss 10 zugeführt, der zwischen den Längsnahtsiegelbacken 17, 18 in den Siegelelementen 34, 35 zu liegen kommt. Die Siegelfläche dieser Siegelelemente 34, 35 ist auf die Geometrie des Zip-Verschlusses 10 abgestimmt und wie in den Figuren 4 und 5 angedeutet beispielsweise U-förmig ausgebildet. In diesem mittleren, etwas zurückversetzten Teil der Siegelflächen käme der Zip-Verschluss 10 zu liegen. Es sind nun einzeln beheizbare Siegelelemente 32 bis 35 vorgesehen, sodass unterschiedliche Temperaturen in diesen Siegelbereichen möglich sind. Dies ist deshalb von Vorteil, da nun die gewünschte Siegeltemperatur zur Einsiegelung des Zip-Verschlusses 10 speziell einstellbar ist, während die Temperatur zur Bildung der Längsnaht in den Bereichen, in denen der Zip-Verschluss 10 nicht positioniert ist, anders eingestellt werden kann. Dadurch erhöht sich die Flexibilität bei der Herstellung der Beutel 9. Zusätzliche Flexibilität ergibt sich durch Einstellung unterschiedlicher Siegelkräfte je Siegelelementpaar.

Die beschriebene Vorrichtung eignet sich insbesondere zur Herstellung sogenannter Doy-Zip-Style-Beutel 9. Dies sind Schlauchbeutel, welche im Kopfbereich zum Öffnen und Wiederverschließen einen Zip-Verschluss 10 im Querbereich aufweisen. Durch die beschriebene Vorrichtung wird es möglich, dass das Versiegeln auch in einem kontinuierlichen Prozess erfolgen kann, ggf. bei gleichzeitigem Einsiegeln des Zip-Verschlusses 10. Dies wird möglich insbesondere durch das Vorsehen einer in Längsrichtung bzw. in Transportrichtung der Folie 1 beweglichen Längssiegeleinrichtung 7. Hierzu bewegt der Antrieb 26 den Aufnahmeträger 16. Dies erfolgt beispielsweise über die Zahnriemenscheiben 24, 25, den Zahnriemen 23 und die Koppelstange 22 in Längsrichtung. Die Bewegung des Aufnahmeträgers 16 in Längsrichtung bzw. parallel zur Transportrichtung der Folie 1 bewegt wiederum die Aufnahme 15 in Längsrichtung, an der die Siegelbacken 17, 18 der Längssiegeleinrichtung 7 befestigt sind. Somit erfolgt also während des Folienvorschubs eine synchrone Bewegung der Längssiegeleinrichtung 7 auch während des Längssiegelvorgangs. Nach erfolgter Längssiegelung werden die beiden Siegelbacken 17, 18 wieder geöffnet, sodass der Folienschlauch zur Erstellung des nächsten Beutels 9 durch das Abzugsorgan 6 weiterbewegt wird. Die Längssiegeleinrichtung 7 hingegen wird entgegen der Transportrichtung der Folie 1 wieder zurück in die Ausgangsposition gebracht bei geöffneten Siegelbacken 17,18. In der Siegelposition schließen sich die beiden Siegelbacken 17, 18 zur Erstellung der nächsten Längsnaht des nächsten Beutels 9. Die Längsnaht des nächsten Beutels 9 wird nun gesiegelt, während der Antrieb 26 die Siegelbacken 17,18 weiter in Transportrichtung der Folie 1 mit derselben Geschwindigkeit wie die Folie 1 bewegt. Nach dem Siegeln der Längsnaht öffnen sich die Siegelbacken 17, 18 wieder und es wird der nächste Beutel 9 erstellt. Hierzu bewegt der Antrieb 26 die Längssiegeleinrichtung 7 wieder nach oben in die Ausgangsposition zur Siegelung des nächsten Beutels 9.

Durch die Beweglichkeit der Längssiegeleinrichtung 7 entlang der Transportrichtung des Verpackungsmaterials 1 wird es nun möglich, eine sogenannte Strip-Funktion zur Reduzierung der Faltenbildung im Bereich der Quersiegeleinheit 8 vorzusehen. Hierzu kann die Quersiegeleinheit 8 bei geschlossenen Siegelbacken 17, 18 der Längssiegeleinrichtung 7 etwas schneller (beispielsweise einstellbar in einem Bereich zwischen 0 und 200% der Foliengeschwindigkeit) als die Längssiegeleinrichtung 7 in Folienabzugsrichtung bewegt werden. Die Quersiegelbacken werden zur Erstellung der Quernaht geschlossen. In der Quersiegeleinheit 8 ist zudem eine Schneidfunktion realisiert zur Trennung der Beutel voneinander.

Die beschriebene Vorrichtung eignet sich insbesondere für vertikale Schlauchbeutelmaschinen. Die Verwendung ist jedoch hierauf nicht eingeschränkt.

## Patentansprüche

1. Vorrichtung zum Versiegeln einer Verpackung oder eines Verpackungsmaterials, umfassend zumindest einen Formatsatz (5) zur Formung eines Verpackungsmaterials (1) zu einem Schlauch, umfassend zumindest ein Abzugsorgang (6), das das Verpackungsmaterial (1) in einer Transportrichtung bewegt, mit zumindest einer Längssiegeleinrichtung (7) zur Erstellung zumindest einer Längsnaht, wobei die Längssiegeleinrichtung (7) zumindest zwei zueinander verfahrbare Siegelbacken (17, 18) umfasst, mit zumindest einer Quersiegeleinheit (8) zur Erstellung zumindest einer Quernaht, wobei zumindest ein Antrieb (26) vorgesehen ist, der die Längssiegeleinrichtung (7) während des Siegelvorgangs der Längsnaht entlang der Transportrichtung des Verpackungsmaterials (1) bewegt, **dadurch gekennzeichnet, dass** zumindest eine Siegelbacke (17, 18) zumindest zwei Siegelelemente (32, 33, 34, 35) umfasst zur Erstellung zumindest zweier Siegelungen, dass zumindest ein Siegelelement (34,35) zur Einsiegelung eines Verschlusses (10), insbesondere eines Zip-Verschlusses, ausgebildet ist.

2. Vorrichtung nach Anspruch 1, **dadurch gekennzeichnet, dass** die Quersiegeleinheit (8) mit einem Antrieb versehen ist, der die Quersiegeleinheit (8) entlang der Transportrichtung des Verpackungsmaterials (1) bewegt.

3. Vorrichtung nach einem der vorhergehenden Ansprüche, **dadurch gekennzeichnet, dass** die Quersiegeleinheit (8) mit zumindest teilweise etwas höherer Geschwindigkeit bewegt wird als die Längssiegeleinrichtung (7) entlang der Transportrichtung des Verpackungsmaterials (1).

4. Vorrichtung nach einem der vorhergehenden Ansprüche, **dadurch gekennzeichnet, dass** die Siegelbacken (17, 18) unterschiedliche Siegelelemente (32 bis 35) umfassen, die einzeln beheizbar und/oder temperierbar und/oder einstellbar bezüglich einer Siegelkraft ausgebildet sind.

5. Vorrichtung nach einem der vorhergehenden Ansprüche, **dadurch gekennzeichnet, dass** die Längssiegeleinrichtung (7) Heizelemente (40, 41) und/oder Temperaturfühler (42, 43) umfasst.

6. Vorrichtung nach einem der vorhergehenden Ansprüche, **dadurch gekennzeichnet, dass** zumindest ein Befestigungs- bzw. Justierungselement (27 bis 30) vorgesehen ist zur Einstellung einer Position zumindest eines Siegelelements (32 bis 35) innerhalb der Siegelbacke (17, 18).

7. Vorrichtung nach einem der vorhergehenden Ansprüche, **dadurch gekennzeichnet, dass** die Längssiegeleinrichtung (7) an einer Aufnahme (15) angeordnet ist, die mit dem Antrieb (26) verbunden ist. wobei an der Aufnahme (15) ein weiteres Antriebsmittel (51) angeordnet ist zur Bewegung der Siegelbacken (17, 18).

8. Vorrichtung nach einem der vorhergehenden Ansprüche, **dadurch gekennzeichnet, dass** ein Aufnahmeträger (16) vorgesehen ist, der im Wesentlichen rechtwinklig zu der Aufnahme (15) angeordnet ist.

9. Vorrichtung nach einem der vorhergehenden Ansprüche, **dadurch gekennzeichnet, dass** der Aufnahmeträger (16) mit dem Antriebsmittel (26) über ein Kopplungsmittel, vorzugsweise eine Koppelstange (22), verbunden ist, das über einen Riemen, vorzugsweise einen Zahnriemen (23) mit zugehörigen Zahnriemenscheiben (24, 25), bewegt wird.

10. Vorrichtung nach einem der vorhergehenden Ansprüche, **dadurch gekennzeichnet, dass** zumindest eine Folienführung (20) vorgesehen ist, die Bestandteil der Längssiegeleinrichtung (7) ist.

## Claims

1. Device for sealing a pack or a packaging material, comprising at least one mould set (5) for moulding a packaging material (1) to form a tube, comprising at least one draw-off member (6) which moves the packaging material (1) in a transportation direction, having at least one longitudinal sealing installation (7) for establishing at least one longitudinal seam, wherein the longitudinal sealing installation (7) comprises at least two mutually displaceable sealing jaws (17, 18), having at least one transverse sealing unit (8) for establishing at least one transverse seam, wherein at least one drive (26), which during the sealing procedure of the longitudinal seam moves the longitudinal sealing installation (7) along the transportation direction of the packaging material (1), is provided, **characterized in that** at least one sealing jaw (17, 18) comprises at least two sealing elements (32, 33, 34, 35) for establishing at least two seals, **in that** at least one sealing element (34, 35) is configured for sealing in a closure (10), in particular a zip closure.

2. Device according to Claim 1, **characterized in that** the transverse sealing unit (8) is provided with a drive which moves the transverse sealing unit (8) along the transportation direction of the packaging material (1).

3. Device according to one of the preceding claims, **characterized in that** the transverse sealing unit (8) is moved along the transportation direction of the packaging material (1) at least partially at a speed that is somewhat higher than that of the longitudinal sealing installation (7).

4. Device according to one of the preceding claims, **characterized in that** the sealing jaws (17, 18) comprise dissimilar sealing elements (32 to 35) which are individually heatable and/or temperature controllable and/or adjustable in terms of a sealing force.

5. Device according to one of the preceding claims, **characterized in that** the longitudinal sealing installation (7) comprises heating elements (40, 41) and/or temperature sensors (42, 43).

6. Device according to one of the preceding claims, **characterized in that** at least one fastening or adjusting element (27 to 30) is provided for adjusting a position of at least one sealing element (32 to 35) within the sealing jaw (17, 18).

7. Device according to one of the preceding claims, **characterized in that** the longitudinal sealing installation (7) is disposed on a receptacle (15) which is connected to the drive (26), wherein a further drive means (51) for moving the sealing jaws (17, 18) is disposed on the receptacle (15).

8. Device according to one of the preceding claims, **characterized in that** a receptacle carrier (16) which is disposed so as to be substantially perpendicular to the receptacle (15) is provided.

9. Device according to one of the preceding claims, **characterized in that** the receptacle carrier (16) is connected to the drive means (26) by way of a coupling means, preferably a coupling rod (22), which is moved by way of a belt, preferably a timing belt (23) having associated timing-belt pulleys (24, 25).

10. Device according to one of the preceding claims, **characterized in that** at least one film guide (20) which is a component part of the longitudinal sealing installation (7) is provided.

## Revendications

1. Dispositif de scellage d'un emballage ou d'un matériau d'emballage, comprenant au moins un ensemble de format (5) pour la mise en forme d'un matériau d'emballage (1) en un tuyau, comprenant au moins un organe d'extraction (6), qui déplace le matériau d'emballage (1) dans une direction de transport, avec au moins un dispositif de scellage longitudinal (7) pour la création d'au moins une soudure longitudinale, dans lequel le dispositif de scellage longitudinal (7) comprend au moins deux mâchoires de scellage (17, 18) déplaçables l'une vers l'autre, avec au moins une unité de scellage transversal (8) pour la création d'au moins une soudure transversale, dans lequel il est prévu au moins un entraînement (26), qui déplace le dispositif de scellage longitudinal (7) pendant l'opération de scellage de la soudure longitudinale le long de la direction de transport du matériau d'emballage (1), **caractérisé en ce qu'**au moins une mâchoire de scellage (17, 18) comprend au moins deux éléments de scellage (32, 33, 34, 35) pour la création d'au moins deux soudures, et **en ce qu'**au moins un élément de scellage (34, 35) est configuré pour sceller une fermeture (10), en particulier une fermeture à glissière.

2. Dispositif selon la revendication 1, **caractérisé en ce que** l'unité de scellage transversal (8) est munie d'un entraînement, qui déplace l'unité de scellage transversal (8) le long de la direction de transport du matériau d'emballage (1).

3. Dispositif selon l'une quelconque des revendications précédentes, **caractérisé en ce que** l'unité de scellage transversal (8) se déplace avec une vitesse au moins en partie légèrement plus élevée que le dispositif de scellage longitudinal (7) le long de la direction de transport du matériau d'emballage (1).

4. Dispositif selon l'une quelconque des revendications précédentes, **caractérisé en ce que** les mâchoires de scellage (17, 18) comprennent différents éléments de scellage (32 à 35), qui peuvent de façon individuelle être chauffés et/ou thermiquement régulés et/ou réglés par rapport à une force de scellage.

5. Dispositif selon l'une quelconque des revendications précédentes, **caractérisé en ce que** le dispositif de scellage longitudinal (7) comprend des éléments de chauffage (40, 41) et/ou des capteurs de température (42, 43).

6. Dispositif selon l'une quelconque des revendications précédentes, **caractérisé en ce qu'**il est prévu au moins un élément de fixation ou d'ajustage (27 à 30) pour le réglage d'une position d'au moins un élément de scellage (32 à 35) à l'intérieur de la mâchoire de scellage (17, 18).

7. Dispositif selon l'une quelconque des revendications précédentes, **caractérisé en ce que** le dispositif de scellage longitudinal (7) est disposé sur un logement (15), qui est relié à l'entraînement (26), dans lequel un autre moyen d'entraînement (51) est disposé sur le logement (15) pour le déplacement des mâchoires de scellage (17, 18).

8. Dispositif selon l'une quelconque des revendications précédentes, **caractérisé en ce qu'**il est prévu un support de logement (16), qui est disposé essentiellement perpendiculairement au logement (15).

9. Dispositif selon l'une quelconque des revendications précédentes, **caractérisé en ce que** le support de logement (16) est relié au moyen d'entraînement (26) par l'intermédiaire d'un moyen de couplage, de préférence une tige de couplage (22), qui est déplacé au moyen d'une courroie, de préférence une courroie dentée (23) avec des poulies à courroie dentée correspondantes (24, 25).

10. Dispositif selon l'une quelconque des revendications précédentes, **caractérisé en ce qu'**il est prévu au moins un guide-feuille (20), qui fait partie du dispositif de scellage longitudinal (7).
